# NEUE EUROPÄISCHE PATENTSCHRIFT

(11) **EP 1 746 451 B2**
(45) Veröffentlichungstag und Bekanntmachung des Hinweises auf die Entscheidung über den Einspruch: **09.10.2019**
(45) Hinweis auf die Patenterteilung: 09.06.2010
(21) Anmeldenummer: 06007466.3
(22) Anmeldetag: 08.04.2006
(51) Int. Cl.: G02B 23/14

(54) **Fernrohr mit grossem Sehfeld und variabler Vergrösserung**
Telescope with wide field of view and variable magnification
Lunette de visée à grand champ et grossissement variable

(30) Priorität: 20.07.2005 AT 12202005
(43) Veröffentlichungstag der Anmeldung: 24.01.2007
(60) Teilanmeldung: 10001987.6
(73) Patentinhaber: Swarovski-Optik KG., 6060 Absam (AT)
(72) Erfinder: Fiedler, Albert, 6067 Absam (AT)
(74) Vertreter: Burger, Hannes

(56) Entgegenhaltungen:
- WO-A2-2006/081411
- AT-B- 31 994
- AT-B- 59 149
- DE-A1- 3 828 413
- DE-A1- 3 833 633
- DE-C- 67 823
- DE-C- 975 486
- GB-A- 303 787
- GB-A- 690 278
- GB-A- 191 121 621
- JP-A- H11 328 789
- US-A- 2 207 124
- US-A- 2 479 792
- US-A- 3 045 545
- US-A- 3 161 716
- US-A- 3 384 434
- US-A- 3 902 251
- US-A- 3 918 791
- US-A- 4 172 634
- US-A- 4 172 634
- US-A- 4 286 844
- US-A- 4 408 842
- US-A- 4 497 548
- US-A- 5 500 769
- US-A- 5 671 088
- LU KAICHANG, ZHU YAFEI, KANG SONGGAO: "New type of large-angle binocular microtelescopes" SPIE CURRENT DEVELOPMENTS IN OPTICAL DESIGN AND OPTICAL ENGINEERING, Bd. 1527, 1991, Seiten 413-418, XP002404670
- MICHAEL BASS: "Handbook of optics" 1995, MCGRAW-HILL,INC , USA , XP002404673 * Seite 2.4 - Seite 2.11 *
- DUNN J: "IMPROVED BINOCULAR DESIGN GIVES USERS A WIDER VIEW" THE ENGINEER, LONDON, GB, 21. Mai 1992 (1992-05-21), Seite 36, XP002044199
- CLUNE L C: "OPTICAL PERFORMANCE OF REIMAGING WIDE FIELD-OF-VIEW (FOV) TELESCOPE" PROCEEDINGS OF THE SPIE, SPIE, BELLINGHAM, VA, US, Bd. 643, 1. April 1986 (1986-04-01), Seiten 114-120, XP002044198 ISSN: 0277-786X
- ALBERT KÖNIG, HORST KÖHLER: "Die Fernrohre und Entfernungsmesser" 1959, SPRINGER , BERLIN * Seite 173 - Seite 179 * * Seite 217 - Seite 219 *
- Gesammette Abhandlungen v. Ernst Abbe, zweiter Band, 1908 (entspricht DE67823)
- ABBE, ERNST: "WISSENSCHAFTLICHE ABHANDLUNGEN AUS VERSCHIEDENEN GEBIETEN", 1989
- ISO 14132-3:2002
- ISO 14133-2:2006
- ISO 14135-2:2003
- ISO 14132-1:2002
- Prospekt 'Zeiss Zielfernrohre', 1922
- Prospekt 'Zeiss Zielfernrohre', 1927
- Prospekt 'Zeiss Rifle Telescopes', 1929
- Prospekt 'Zeiss Zielfernrohre', 1930
- Anleitung für das Auseinandernehmen von Zeiss-Zielfernrohren 1926
- Anleitung für das Auseinandernehmen von Zeiss-Zielfernrohren 1928
- Anleitung für das Auseinandernehmen von Zeiss-Zielfernrohren 1939
- Kopie der DIN ISO 14490-1
- Kopie der DIN ISO 14490-3

## Beschreibung

Die vorliegende Erfindung betrifft ein Fernrohr oder Zielfernrohr welche fernoptische Einrichtungen sind, mit einem Umkehrsystem und einer verstellbaren Vergrößerungsoptik mit einer mehr als vierfachen Vergrößerung.

In dem Dokument US 5,500,769 sind optische Systeme für Feldstecher mit einer mit Hilfe einer beweglichen Feldlinseneinheit veränderbaren Vergrößerung beschrieben. Dabei ist vorgesehen, dass die Feldlinseneinheit von einer Position an der Seite der Objektivlinseneinheit der Zwischenabbildung zu einer Position an der Seite der Augenlinseneinheit der Zwischenabbildung bewegt, d. h. die Feldlinseneinheit durch das Zwischenbild bewegt wird. Eine solche Bewegung führt demnach zu einer Erhöhung der Vergrößerung des Systems, wobei die Bewegung die Vergrößerung des Systems von etwa 7 auf etwa 12 erhöhen kann. Die verstellbare Vergrößerungsoptik - das ist in diesem Fall die Feldlinseneinheit - bewirkt somit eine sich um das 1,7-fache (Verhältnis aus der größten zu der kleinsten Vergrößerung des Gesamtsystems =12/7) verändernde Vergrößerung, was einem Zoomfaktor von 1,7 entspricht.

Das Dokument GB 690,278 offenbart einen Sucher mit einem variablen Sehfeld für einen Fotoapparat bzw. eine Filmkamera. Der Artikel "New Type of Large-Angle-Binocular-Microtelescopes" in den Proceedings der "Society of Photo-Optical Instrumentation Engineers" (SPIE, Volume 1527, Page 413-418) behandelt die konstruktive Gestaltung von Feldstechern mit Galileifernrohren, bei denen ein großes Gesichtsfeld erreicht werden soll. Auch aus dem Dokument US 2,479,792 A ist bereits ein Zielfernrohr mit einer verstellbaren Vergrößerungsoptik bekannt. Dabei kann die Vergrößerung des Teleskops zwischen 2,5-fach und 4-fach verändert werden, entsprechend einem 1,6 fachen Zoom. In dem Dokument GB 303,787 wird ein Teleskop bzw. ein Umkehr-Linsen-System für Teleskope beschrieben, wobei durch das dabei verwendete Umkehr-Linsen-System eine kontinuierlich veränderliche Gesamtvergrößerung zwischen einer fünffachen und einer zehnfachen Vergrößerung (Zoom 2-fach) erreicht wird.

Das in dem Dokument US 3,045,545 beschriebene optische System für ein Beobachtungsgerät umfasst neben dem Objektiv und dem Okular eine Zoomoptik zur kontinuierlichen Veränderung der Vergrößerung. Die Zoomoptik bildet dabei das in einer objektivseitigen Bildebene entworfene Zwischenbild mit einem veränderbaren Abbildungsmaßstab in die okularseitige Bildebene ab, wobei das Bild auch aufgerichtet bzw. umgekehrt wird. Die Zoomoptik besteht dabei aus zwei gegeneinander verschiebbaren Linsensystemen. Das beschriebene Beobachtungsgerät umfasst weiters zwischen dem Objektiv und der Zoomoptik bzw. dem Umkehrsystem ein als Fokusierer bezeichnetes Linsensystem und eine Feldlinse. Die Vergrößerung des Beobachtungsgeräts kann über einen Bereich (Zoom) von 4:1 variiert werden. Bei dem Zielfernrohr gemäß dem Dokument US 3,918,791 ist zwischen dem Objektiv und dem Okular neben einer in Richtung der optischen Achse verschiebbaren Feldlinse zur Aufrichtung und Variation der Vergrößerung eine Anastigmat-Linsengruppe vorgesehen.

Wenn ein Gegenstand in großer Entfernung mit bloßem Auge betrachtet wird, so erscheint dieser unter einem kleinen Winkel. Sinn einer jeden fernoptischen Einrichtung ist es, diesen kleinen Winkel zu vergrößern. Die fernoptische Einrichtung sorgt also dafür, dass ein möglichst großer Erscheinungswinkel in das Auge des Betrachters gelangen kann. Zugleich sollte ein möglichst großer Geländeausschnitt überblickt werden können.

Bei gattungsgemäßen zoombaren fernoptischen Einrichtungen mit verstellbarer Vergrößerung ist es besonders kritisch, über den gesamten Vergrößerungsbereich einen möglichst großen Geländeausschnitt überblicken zu können.

Aufgabe der Erfindung ist es, gattungsgemäße fernoptische Einrichtungen diesbezüglich zu verbessern.

Dies wird erfindungsgemäß durch die Merkmale des im Anspruch 1 definierten Fernrohrs oder Zielfernrohrs gewehrte. Dieses weist eine optische Strahlumlenkeinrichtung auf, so dass bei allen Vergrößerungen ein subjektives Sehfeld der fernoptischen Einrichtung von mindestens 22°, vorzugsweise zwischen 22° und 24°, zumindest für Licht mit einer Wellenlänge von etwa 550 nm gewährleistet ist.

Mittels der optischen Strahlumlenkeinrichtung ist es nun auch bei niedrigen Vergrößerungen, insbesondere bei der niedrigsten Vergrößerung, der fernoptischen Einrichtung möglich, ein subjektives Sehfeld von mindestens 22° bereitzustellen. Dies war bisher nur bei größeren Vergrößerungen gattungsgemäßer fernoptischer Einrichtungen möglich. Der Betrachter sieht mit Hilfe der erfindungsgemäßen fernoptischen Einrichtung somit auch bei niedrigen Vergrößerungen einen größeren Geländeausschnitt, als dies der Stand der Technik bisher zuließ.

Gemäß eines weiteren Aspektes der Erfindung ist vorgesehen dass die Strahlumlenkeinrichtung in der maximalen Vergrößerung eine Gesamtbrennweite des Umkehrsystems zwischen 11 mm und 7 mm, vorzugsweise zwischen 10 mm und 8 mm, gewährleistet.

Weitere Einzelheiten und Merkmale der Erfindung werden anhand der nachfolgend beschriebenen Figuren erläutert. Dabei zeigt:
- Fig. 1: einen Längsschnitt durch ein Zielfernrohr gemäß des Standes der Technik,
- Fig. 2a bis 2c: jeweils einen Schnitt durch ein Umkehrsystem gemäß des Standes der Technik,
- Fig. 3a bis 3c: jeweils einen Schnitt durch ein Umkehrsystem für ein erfindungsgemäßes Ausführungsbeispiel eines Zielfernrohrs und
- Fig. 4: einen schematisierten Messaufbau zur Bestimmung des subjektiven Sehfeldes.

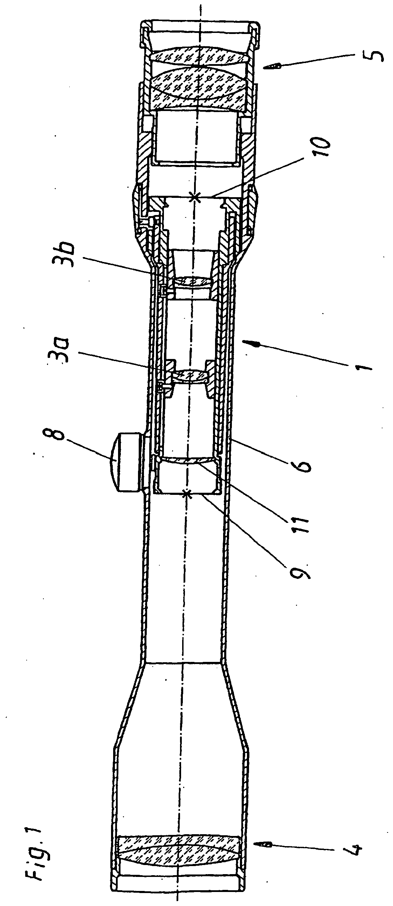

Fig. 1 zeigt schematisch einen Schnitt durch ein Zielfernrohr gemäß des Standes der Technik. Dieses weist auf der beim Beobachten dem Objekt zugewandten Seite eine im Folgenden als Objektiv 4 bezeichnete Linsenanordnung und auf der dem Auge des Betrachters zugewandten Seite ein als Okular 5 bezeichnetes Linsensystem auf. Zwischen Objektiv 4 und Okular 5 befindet sich das Mittelrohr 6. Dieses trägt häufig einen oder mehrere Verstelltürme 8, mit denen verschiedene beim Stand der Technik bekannte Justierfunktionen durchgeführt werden können. Innerhalb des Mittelrohres befindet sich zwischen Objektiv 4 und Okular 5 das Umkehrsystem 1. Dies ist ein beim Stand der Technik bekanntes optisches System, das zur Aufrichtung des vom Objektiv 4 erzeugten Bildes dient. Das Umkehrsystem 1 ist in der Regel zwischen der objektivseitigen Bildebene 9 und der okularseitigen Bildebene 10 angeordnet. Darüber hinaus dient das Umkehrsystem 1 häufig nicht nur dem Aufrichten sondern auch dem Vergrößern des in der objektivseitigen Bildebene 9 erzeugten Zwischenbildes. In dem Zielfernrohr gemäß Fig. 1 ist die Vergrößerungsoptik in das Umkehrsystem 1 integriert. Vergrößerungsoptik und Umkehrsystem sind somit in einem Bauteil ausgeführt.

Zum Vergrößern und Aufrichten des Bildes sind zwei optische Elemente 3a und 3b vorgesehen. In der Regel handelt es sich hierbei um Achromaten, die in günstiger Weise zur Kontrolle der chromatischen Aberration als sogenannte Kittlinsen, also als zusammengeklebte Linsenanordnungen ausgeführt sind. Sie weisen beim Stand der Technik wie auch bei Umkehrsystemen bzw. Fernrohren oder Zielfernrohren gemäß der Erfindung günstigerweise Brechkräfte von + 20 dpt (Dioptrien) bis + 53 dpt, vorzugsweise von + 21 dpt bis + 35 dpt, besonders bevorzugt im Bereich zwischen + 23 dpt und + 26 dpt, auf. Um die Vergrößerung des gezeigten Zielfernrohres verstellbar zu gestalten, sind die optischen Elemente 3a und 3b entlang von Steuernuten bewegbar. Durch Verschieben der optischen Elemente 3a und 3b wird das vom Objektiv 4 in der objektivseitigen Bildebene 9 entworfene Zwischenbild mit sich veränderndem Abbildungsmaßstab und aufgerichtet in der okularseitigen Bildebene 10 abgebildet. Der Abstand der beiden Bildebenen 9 und 10 ändert sich im gezeigten Ausführungsbeispiel durch das Verschieben der optischen Elemente 3a und 3b nicht. Beim Stand der Technik ist es darüber hinaus auch bekannt, zusätzlich noch eine Feldlinse 11 vorzusehen. Diese hilft, das vom Objektiv 4 kommende Strahlenbündel eines am Sehfeldrand liegenden Objektpunktes durch den engen Kanal des Mittelrohres 6 bzw. Umkehrsystems 1 hindurchzuleiten.

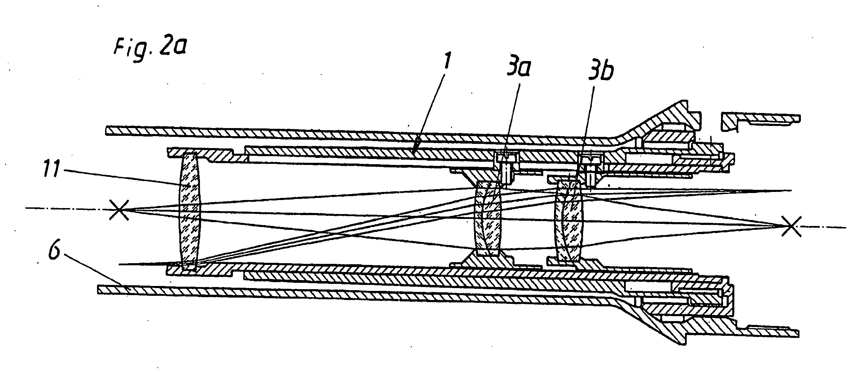

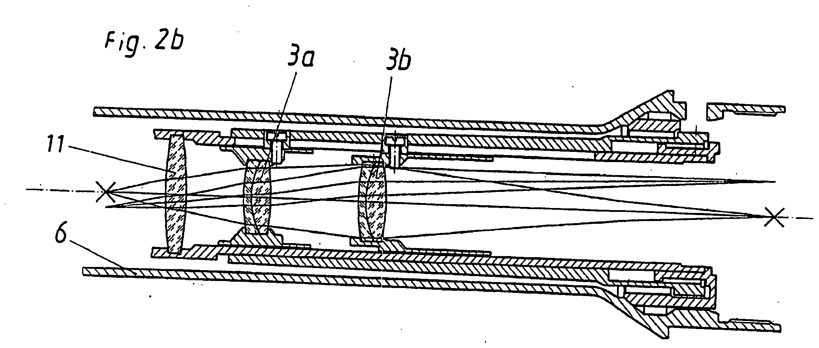

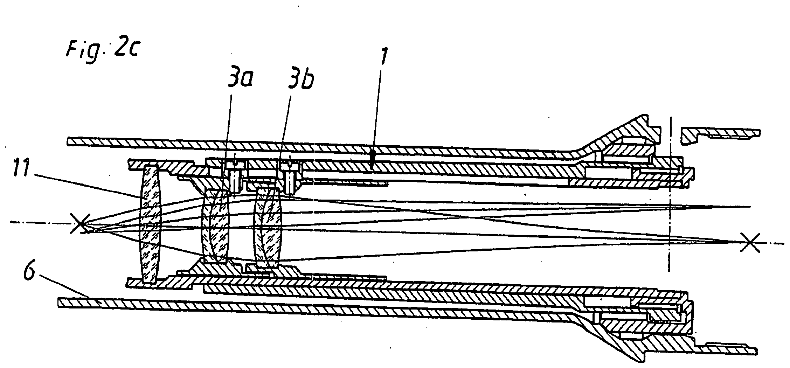

Die Veränderung des Abbildungsmaßstabes durch Bewegung der optischen Elemente 3a und 3b entlang von hier nicht weiter im Detail dargestellten Steuernuten ist beim Stand der Technik bekannt. Die Fig. 2a bis 2c zeigen die Stellungen der optischen Elemente 3a und 3b bei verschiedenen Vergrößerungen. In der in Fig. 2a gezeigten Stellung wird zum Beispiel eine einfache Vergrößerung erreicht. In der Stellung gemäß Fig. 2b erzielt das Umkehrsystem 1 eine Vergrößerung um das 2,5-fache und in der in Fig. 2c gezeigten Stellung um das 4-fache.

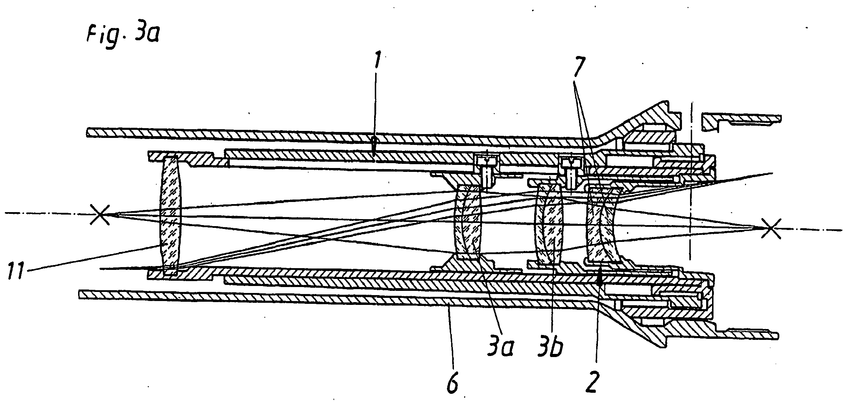

Um nun ein subjektives Sehfeld von mindestens 22° bei einem Fernrohr oder Zielfernrohr mit einer maximalen Vergrößerung bzw. einem maximalen Zoom größer vierfach auch bei niedrigen Vergrößerungen gewährleisten zu können, sieht die Erfindung eine optische Strahlumlenkeinrichtung 2 vor. Diese ist in einem Ausführungsbeispiel in den Fig. 3a bis 3c gezeigt und hier als zusätzliche Linsenanordnung in das Umkehrsystem 1 integriert. Das in den Fig. 3a bis 3c gezeigte erfindungsgemäße Umkehrsystem 1 kann zum Beispiel an Stelle des dort gezeigten Umkehrsystems 1 in ein Zielfernrohr gemäß Fig. 1 integriert werden.

Die optische Strahlumlenkeinrichtung 2, die nicht unter den Schutzumfang des Anspruchs 1 fällt, kann aber genauso gut als separates Bauteil, getrennt vom Umkehrsystem 1 in der fernoptischen Einrichtung angeordnet sein. Andererseits ist es aber auch denkbar diese optische Strahlumlenkeinrichtung 2 durch entsprechende Ausbildung der Linsen 11, 3a und 3b zu realisieren. Günstigerweise ist vorgesehen, dass die optische Strahlumlenkeinrichtung das subjektive Sehfeld vom mindestens 22°, vorzugsweise zwischen 22° und 24°, bei einer Vergrößerungsoptik, vorzugsweise des Umkehrsystems, mit einer mindestens fünffachen, vorzugsweise bei einer mindestens sechsfachen, maximalen Vergrößerung bei allen Vergrößerungsstufen gewährleistet. Zur besseren Kontrolle der chromatischen Aberration erweist es sich als sinnvoll, dass die optische Strahlumlenkeinrichtung 2, vorzugsweise zwei, miteinander verklebte Linsen 7, also Kittlinsen, aufweist. Es wäre aber auch denkbar, die optische Strahlumlenkeinrichtung 2 als Einzellinse auszubilden.

Es hat sich als günstig herausgestellt, die optische Strahlumlenkeinrichtung 2 auf der zum Okular 5 weisenden Seite des Umkehrsystems 1 anzuordnen. Dabei ist die Positionierung auf der vom Okular 5 wegweisenden Seite der okularseitigen Bildebene 10.

Eine konstruktiv besonders einfache Lösung sieht vor, dass die optische Strahlumlenkeinrichtung 2 fix, also nicht bewegbar bezüglich des Mittelrohres 6, angeordnet ist. Es kann sich in gewissen Ausführungsformen aber auch als notwendig erweisen, die optische Strahlumlenkeinrichtung 2 bewegbar, also in der Regel entlang der optischen Achse verschiebbar, auszugestalten.

Das Mittelrohr 6 weist bisher bei gängigen Zielfernrohren einen Außendurchmesser zwischen 30 mm und 35 mm auf. Dies natürlich gerechnet ohne etwaig vorhandene Verstelltürme 8 oder dergleichen. Diese Abmessung des Mittelrohres 6 wird günstigerweise auch bei erfindungsgemäßen Zielfernrohren beibehalten.

Die optische Strahlumlenkeinrichtung 2 weist eine Brechkraft zwischen -20 dpt (Dioptrien) und -40 dpt, vorzugsweise zwischen -27 dpt und -37 dpt, auf. In einem konkreten Beispiel ist eine Brechkraft von -27,03 dpt vorgesehen, wobei bei allen Vergrößerungen ein subjektives Sehfeld von 23,5° erreicht wird.

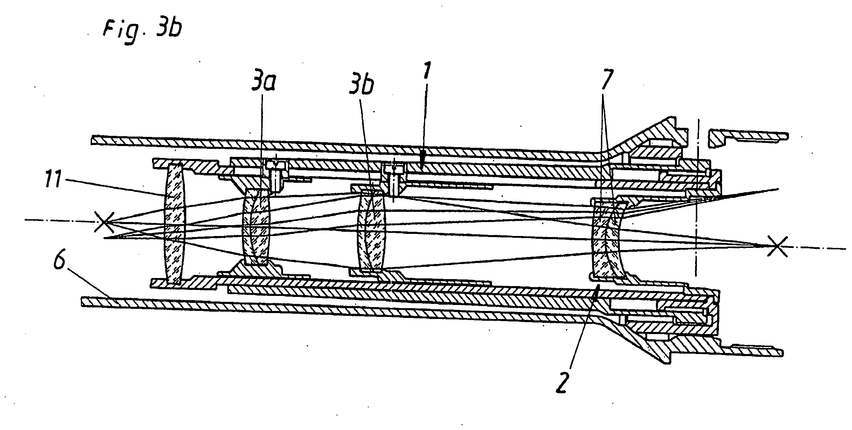

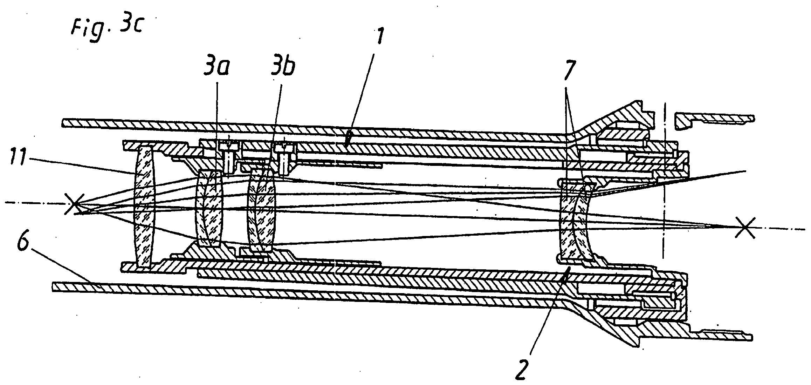

Die Fig. 3a bis 3c zeigen das erfindungsgemäße Umkehrsystem 1 wiederum in drei verschiedenen Positionen der für die Vergrößerung und Umkehrung des Bildes vorgesehenen optischen Elemente 3a und 3b. In der Stellung in Fig. 3a handelt es sich zum Beispiel um eine einfache Vergrößerung. Fig. 3b zeigt die Positionierung bei einer 3,5-fachen Vergrößerung und Fig. 3c bei einer sechsfachen Vergrößerung. Die optische Strahlumlenkeinrichtung 2 sorgt durch Strahlumlenkung für eine Vergrößerung des subjektiven Sehfeldes. Es kann hierdurch erfindungsgemäß bei allen Vergrößerungen ein subjektives Sehfeld von mindestens 22° bzw. bei der maximalen Vergrößerung eine Gesamtbrennweite kleiner gleich 11 mm erreicht werden. Die Gesamtbrennweite des erfindungsgemäßen Umkehrsystems 1 liegt auf Grund der Strahlumlenkeinrichtung 2 bei der maximalen Vergrößerung günstigerweise zwischen 11 mm und 7 mm, vorzugsweise zwischen 10 mm und 8 mm. Im erwähnten konkreten Ausführungsbeispiel wurde eine Gesamtbrennweite von 8,264 mm in der maximalen Vergrößerung erreicht.

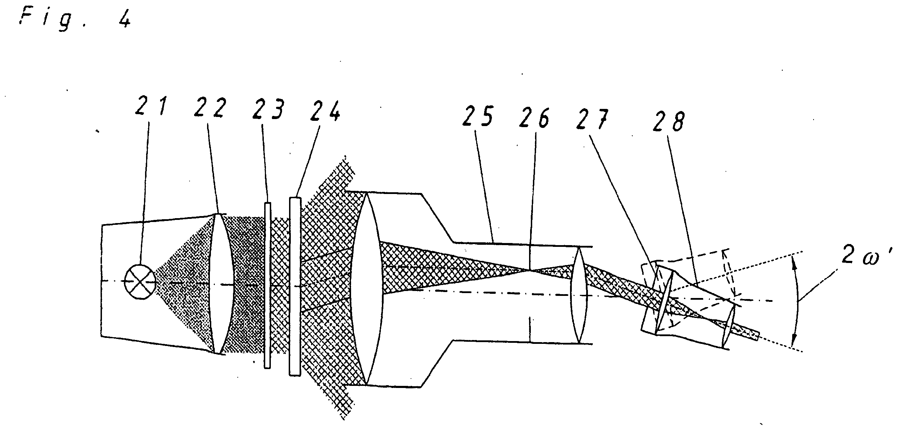

Die Größe des subjektiven Sehfeldes 2 w' wird mittels einer Winkelmessung bestimmt. Der entsprechende Messaufbau für Prüflinge mit einer reellen Austrittspupille ist in Fig. 4 gezeigt. Auf der des Prüflings 25 wird ein Hilfsfernrohr 28 auf einem Drehtisch mit einer Winkelmesseinrichtung montiert. Es sollte dabei ein Hilfsfernrohr 28 mit etwa dreifacher Vergrößerung, einem Durchmesser der Eintrittspupille von etwa 3 mm und einer Peilmarke, wie zum Beispiel einem Fadenkreuz, verwendet werden. Zur Vermeidung von Farbsäumen im Bild wird zur Messung grünes Licht mit einer Wellenlänge von etwa 550 nm verwendet. Der Messaufbau sieht eine Abfolge mit einer Lichtquelle 21, einem Kondensor 22, einem Filter 23, einer Streuscheibe 24, einer zu prüfenden fernoptischen Einrichtung (Prüfling) 25, einer Sehfeldblende 26 und einem Hilfsfernrohr 28 auf der Position 27 der Austrittspupille vor. Zur Durchführung der Messung liegt die Schwenkachse des Hilfsfernrohres 28 am Ort der Austrittspupille 27 und in der Ebene der Eintrittspupille des Hilfsfernrohrs. Die Schwenkachse schneidet die optische Achse des Prüflings 25 und die des Hilfsfernrohres 28 rechtwinklig. Das auf die Sehfeldblende 26 des Prüflings 25 scharf gestellte Hilfsfernrohr 28 ist zu schwenken, um dessen Peilmarke nacheinander auf einander gegenüberliegende Ränder des Sehfeldes zu bringen. Die Winkeldifferenz ist an der Skala der Winkelmesseinrichtung des Schwenktisches (in Grad) abzulesen.

Die Messung der Gesamtbrennweite eines Umkehrsystems erfolgt gemäß DIN 58189 (herausgegeben im Mai 1996) und kann mit handelsüblichen Prüfgeräten durchgeführt werden.

## Patentansprüche

1. Fernrohr oder Zielfernrohr, mit einem Mittelrohr (6), das zwischen einem Objektiv (4) und einem Okular (5) angeordnet ist, wobei das Mittelrohr (6) einen maximalen Außendurchmesser von 35 mm aufweist,
- und wobei das Mittelrohr (6) ein Umkehrsystem (1) enthält, in das eine verstellbare Vergrößerungsoptik mit einer mehr als vierfachen Vergrößerung integriert ist, und die in einem Bauteil ausgeführt sind und die Vergrößungsoptik durch eine
Linsenanordnung mit zumindest zwei relativ zueinander verschiebbaren optischen Elementen (3a, 3b) gebildet ist,
- wobei das Umkehrsystem (1) zwischen einer objektivseitigen Bildebene (9) und einer okularseitigen Bildebene (10) angeordnet ist,
- und wobei die objektivseitige Bildebene (9) zwischen dem Objektiv (4) und der dem Objektiv (4) zugewandten Seite des Umkehrsystems (1) liegt, und die okularseitige Bildebene (10) zwischen dem Okular (5) und der dem Okular (5) zugewandten Seite des Umkehrsystems (1) liegt,
- und wobei durch das Verschieben zumindest der optischen Elemente (3a, 3b) des Umkehrsystems (1) ein von dem Objektiv (4) in einer objektivseitigen Bildebene (9) entworfenes Zwischenbild mit einem veränderbaren Abbildungsmaßstab und aufgerichtet mit einem maximalen Zoom größer vierfach, in einer okularseitigen Bildebene (10) vergrößert abgebildet ist
- und wobei eine optische Strahlumlenkeinrichtung (2) in das Umkehrsystems (1) integriert ist, wobei die Strahlumlenkeinrichtung (2) durch eine zusätzliche Linsenanordnung gebildet ist, die auf der dem Okular (5) zugewandten Seite des Umkehrsystems (1) angeordnet ist und eine negative Brechkraft zwischen -20 dpt (Dioptrien) und -40 dpt aufweist,
- so dass bei allen Vergrößerungen, mit welchen das objektivseitige Zwischenbild in die okularseitigen Bildebene (10) abgebildet wird, ein subjektives Sehfeld (2 ω') der fernoptischen Einrichtung von mindestens 22°, zumindest für Licht mit einer Wellenlänge von etwa 550 nm gewährleistet ist,
- und wobei die optische Strahlumlenkeirichtung (2) auf der vom Okular (5) wegweisenden Seile der Okularseitigen Bildebene (10) des Fernrohrs oder Zielfernrohrs angeordnet ist.

2. Fernrohr oder Zielfernrohr nach Anspruch 1, **dadurch gekennzeichnet, dass** die Vergrößerung der Vergrößerungsoptik des Umkehrsystems (1) mindestens fünffach, vorzugsweise mindestens sechsfach ist.

3. Fernrohr oder Zielfernrohr nach einem der Ansprüche 1 bis 2, **dadurch gekennzeichnet, dass** die optische Strahlumlenkeinrichtung (2), vorzugsweise zwei, miteinander verklebte Linsen (7) aufweist.

4. Fernrohr oder Zielfernrohr nach einem der Ansprüche 1 bis 3, **dadurch gekennzeichnet, dass** die optische Strahlumlenkeinrichtung (2) eine Brechkraft zwischen -27 dpt und -37 dpt aufweist.

5. Fernrohr oder Zielfernrohr nach einem der Ansprüche 1 bis 4, **dadurch gekennzeichnet, dass** das Umkehrsystems (1) in der maximalen Vergrößerung eine Gesamtbrennweite von höchstens 11 mm, zumindest für Licht mit einer Wellenlänge von etwa 550 nm, aufweist.

6. Fernrohr oder Zielfernrohr nach Anspruch 5, **dadurch gekennzeichnet, dass** das Umkehrsystems (1) in der maximalen Vergrößerung eine Gesamtbrennweite zwischen 11 mm und 7 mm, vorzugsweise zwischen 10 mm und 8 mm, aufweist.

7. Fernrohr oder Zielfernrohr nach einem der Ansprüche 1 bis 6, **dadurch gekennzeichnet, dass** die optische Strahlumlenkeinrichtung (2) auf der zum Okular (5) weisenden Seite des Umkehrsystems (1), fix, angeordnet ist.

## Claims

1. A telescope or sighting telescope, with a central tube (6) disposed between an objective lens (4) and an eyepiece (5), wherein the central tube (6) has a maximum external diameter of 35 mm,
- and wherein the central tube (6) contains an erecting system (1), in which a displaceable optical magnification means with more than a fourfold magnification is integrated, and which are accommodated in one component and the optical magnification means comprises a lens arrangement with at least two optical elements (3a, 3b) which can be displaced relative to one another,
- and wherein the erecting system (1) is disposed between an objective lens-end image plane (9) and an eyepiece-end image plane (10),
- and wherein the objective lens-end image plane (9) lies between the objective lens (4) and the end of the erecting system (1) facing the objective lens (4), and the eyepiece-end image plane (10) lies between the eyepiece (5) and the end of the erecting system (1) facing the eyepiece (5),
- and wherein when at least one of the optical elements (3a, 3b) of the erecting system (1) is displaced, an intermediate image projected by the objective lens (4) in an objective lens-end image plane (9) is magnified with a variable reproduction scale and oriented upright in an eyepiece-end image plane (10) with a more than fourfold maximum zoom,
- and wherein an optical beam deflector device (2) is integrated in the erecting system (1), wherein the beam deflector device (2) is provided in the form of an additional lens arrangement disposed on the end of the erecting system (1) facing the eyepiece (5) and has a negative refractive power of between -20 dpt (diopters) and -40 dpt,
- so that a subjective field of view (2 ω') of the long-range optical device of at least 22° is guaranteed for all magnifications at which the objective lens-end intermediate image is projected into the eyepiece-end image plane (10), at least for light with a wavelength of approximately 550 nm,
- and wherein the optical beam deflector device (2) is arranged on the side of the eyepiece-end image plane (10) of the telescope or sighting telescope facing away from the eyepiece (5).

2. The telescope or sighting telescope according to claim 1, **characterized in that** the magnification of the optical magnification means of the inverting system (1) is at least fivefold, preferably at least sixfold.

3. The telescope or sighting telescope according to one of claims 1 to 2, **characterized in that** the optical beam deflector device (2) comprises preferably two lenses (7) adhered to one another.

4. The telescope or sighting telescope according to one of claims 1 to 3, **characterized in that** the optical beam deflector device (2) has a refractive power of between -27 dpt and -37 dpt.

5. The telescope or sighting telescope according to one of claims 1 to 4, **characterized in that** the erecting system (1) has a total focal length of at most 11 mm in the maximum magnification, at least for light with a wavelength of approximately 550 nm.

6. The telescope or sighting telescope according to claim 5, **characterized in that** the erecting system (1) has a total focal length of between 11 mm and 7 mm, preferably between 10 mm and 8 mm, in the maximum magnification.

7. The telescope or sighting telescope according to one of claims 1 to 6, **characterized in that** the optical beam deflector device (2) is fixedly arranged on the side of the erecting system (1) facing the eyepiece (5).

## Revendications

1. Lunette ou lunette de visée, avec un tube médian (6), qui est disposé entre un objectif (4) et un oculaire (5), où le tube médian (6) présente un diamètre extérieur maximal de 35 mm,
- et où le tube médian (6) comporte un système d'inversion (1), dans lequel est intégrée une optique de grossissement ajustable avec un grossissement supérieur à quatre fois, et qui sont guidés dans un composant et l'optique de grossissement est formée par un agencement de lentilles avec au moins deux éléments optiques déplaçables l'un relativement à l'autre (3a, 3b),
- et où le système d'inversion (1) est disposé entre un plan image côté objectif (9) et un plan image côté oculaire (10),
- et où le plan d'image côté objectif (9) se situe entre l'objectif (4) et le côté du système d'inversion (1) orienté vers l'objectif (4), et le plan d'image côté oculaire (10) se situe entre l'oculaire (5) et le côté du système d'inversion (1) orienté vers l'oculaire (5),
- et où par le déplacement d'au moins les éléments optiques (3a, 3b) du système d'inversion (1), une image intermédiaire produite par l'objectif (4) dans un plan d'image côté objectif (9), est produite dans un plan d'image (10) côté oculaire, redressée et agrandie avec un coefficient de grossissement ajustable, le coefficient maximal étant supérieur à quatre,
- et où une installation de déviation de faisceau optique (2) est intégrée dans le système d'inversion (1), où l'installation de déviation de faisceau (2) est formée par un agencement de lentilles additionnel, qui est disposé sur le côté du système d'inversion (1) orienté vers l'oculaire (5) et présente une force de réfraction négative entre -20 dpt (dioptries) et -40 dpt,
- de sorte que pour tous les agrandissements, avec lesquels l'image intermédiaire côté objectif est représentée dans le plan d'image côté oculaire (10), un champ de vision subjectif (2ω') de l'installation d'optique éloignée d'au moins 22°, au moins pour la lumière d'une longueur d'onde d'environ 550 nm est assurée,
- et où l'installation de déviation de faisceau optique (2) est disposée sur le côté du plan d'image (10) côté oculaire opposé à l'oculaire (5) de la lunette ou lunette de visée.

2. Lunette ou lunette de visée selon la revendication 1, **caractérisée en ce que** le grossissement de l'optique de grossissement du système d'inversion (1) est au moins de cinq fois, de préférence au moins de six fois.

3. Lunette ou lunette de visée selon l'une des revendications 1 à 2, **caractérisée en ce que** le dispositif de déviation de faisceau optique (2) présente de préférence deux lentilles (7) assemblées par collage.

4. Lunette ou lunette de visée selon l'une des revendications 1 à 3, **caractérisée en ce que** l'installation de déviation de faisceau optique (2) présente une force de réfraction entre -27 dpt et -37 dpt.

5. Lunette ou lunette de visée selon l'une des revendications 1 à 4, **caractérisée en ce que** le système d'inversion (1), au grossissement maximal, présente une focale totale de 11 mm au maximum, au moins pour la lumière d'une longueur d'onde d'environ 550 nm.

6. Lunette ou lunette de visée selon la revendication 5, **caractérisée en ce que** le système d'inversion (1) présente, au grossissement maximal, une focale totale entre 11 mm et 7 mm, de préférence entre 10 mm et 8 mm.

7. Lunette ou lunette de visée selon l'une des revendications 1 à 6, **caractérisée en ce que** l'installation de déviation de faisceau optique (2) est disposée fixement sur le côté du système d'inversion (1) orienté vers l'oculaire (5).
